# EUROPEAN PATENT APPLICATION

(11) **EP 2 660 374 A1**
(43) Date of publication of application: **06.11.2013**
(21) Application number: 11854284.4
(22) Date of filing: 22.12.2011
(51) Int. Cl.: D01F 9/08, C03C 13/00

(54) **BIO-SOLUBLE INORGANIC FIBER**

(30) Priority: 28.12.2010 JP 2010293829; 17.03.2011 JP 2011059354
(71) Applicant: Nichias Corporation, Tokyo 105-8555 (JP)
(72) Inventor: KITAHARA, Hideki, Tokyo 105-8555 (JP); MOCHIDA, Takahito, Tokyo 105-8555 (JP); NAKAJIMA, Takashi, Tokyo 105-8555 (JP)
(74) Representative: Schmitz, Joseph
(86) International application number: PCT/JP2011/007205
(87) International publication number: WO 2012/090455

(57) **Abstract**

An inorganic fiber having the following composition: 71 wt% to 80 wt% of SiO₂, 18 wt% to 27 wt% of CaO, 0 to 3 wt% of MgO, and 1.1 wt% to 3.4 wt% of Al₂O₃, wherein the amount of each of ZrO₂ and R₂O₃ (R is selected from Sc, La, Ce, Pr, Nd, Sm, Eu, Gd, Tb, Dy, Ho, Er, Tm, Yb, Lu, Y or mixtures thereof) is 0.1 wt% or less, the amount of each alkaline metal oxide is 0.2 wt% or less and the total amount of SiO₂, CaO, MgO and Al₂O₃ is 99 wt% or more.

## Description

### TECHNICAL FIELD

The invention relates to an alkaline earth silicate fiber which is soluble in a physiological saline.

### BACKGROUND ART

Inorganic fibers are light-weight, easy to handle, and excellent in heat resistance, and hence, for example, they are used as heat-resistant sealing materials. On the other hand, in recent years, it has been indicated that the inorganic fibers are inhaled into human bodies to invade the lungs. Thus, there have been developed biosoluble inorganic fibers which do not or scarcely bring about the above problem even if inhaled into human bodies (e.g., Patent Documents 1 and 2).

### Related Art Documents

### Patent Documents

Patent Document 1: Japanese Patent Publication No. 3753416
Patent Document 2: Japanese PCT Patent Application Laid-open No. 2005-514318

### SUMMARY OF THE INVENTION

Patent Document 2 discloses many fibers which are excellent in fire resistance and physiological (saline) solubility, but the quality of the fibers is poor. In particular, it is described therein that the more the amount of Al₂O₃ is, the lower the physiological solubility is, and this fact adversely affects the quality of the fibers.
With regard to inorganic fibers which are soluble in a physiological fluid, the viscosity of their raw materials is high, and hence the materials have to be heated up to an extremely high temperature for fiber spinning. Therefore, it has been difficult to obtain the fibers having a small fiber diameter.
In addition, there is another problem that when the water solubility of the fibers is high, forming is difficult.

An object of the invention is to provide an inorganic fiber which is excellent in fire resistance and physiological solubility.

The inventors of the invention have intensively investigated, and as a result, it have found that a fiber of a specific composition has extremely excellent properties. That is, the fiber of the specific composition is excellent in physiological solubility before and after heating, and a fiber quality, and the viscosity of a material to be used is low, which makes fiber spinning easy. In addition, water solubility of the fiber is not too high, which makes forming and manufacturing easy. On the basis of the finding, the invention has been completed.
According to the invention, the following inorganic fibers can be provided.
1. An inorganic fiber having the following composition:
   - SiO₂: 71 wt% to 80 wt%
   - CaO: 18 wt% to 27 wt%
   - MgO: 0 wt% to 3 wt%
   - Al₂O₃: 1.1 wt% to 3.4 wt%
   wherein the amount of each of ZrO₂ and R₂O₃ (R is selected from Sc, La, Ce, Pr, Nd, Sm, Eu, Gd, Tb, Dy, Ho, Er, Tm, Yb, Lu, Y or mixtures thereof) is 0.1 wt% or less, the amount of each alkaline metal oxide is 0.2 wt% or less and the total amount of SiO₂, CaO, MgO and Al₂O₃ is 99 wt% or more.
2. The inorganic fiber according to 1, wherein the amount of each alkaline metal oxide is 0.1 wt% or less.
3. The inorganic fiber according to 1 or 2, wherein the amount of each of TiO₂, ZnO, B₂O₃ and P₂O₅ is 0.1 wt% or less.
4. The inorganic fiber according to any one of 1-3, wherein the amount of Al₂O₃ is 1.1 wt% to 1.95 wt%.
5. The inorganic fiber according to any one of 1-3, wherein the amount of Al₂O₃ is 2.0 wt% to 3.4 wt%.
6. The inorganic fiber according to any one of 1-3, wherein the amount of Al₂O₃ is 1.3 wt% to 2.5 wt%.
7. The inorganic fiber according to any one of 1-6, wherein the amount of SiO₂ is 71.25 wt% or more.
8. An inorganic fiber having the following composition:
   - SiO₂: 71 wt% to 80 wt%
   - CaO: 18 wt% to 27 wt%
   - MgO: 0 to 3 wt%
   - Al₂O₃: 2.0 wt% to 3.4 wt%
   wherein the amount of each of ZrO₂ and R₂O₃ (R is selected from Sc, La, Ce, Pr, Nd, Sm, Eu, Gd, Tb, Dy, Ho, Er, Tm, Yb, Lu, Y or mixtures thereof) is 0.1 wt% or less, and the total amount of SiO₂, CaO, MgO and Al₂O₃ is 99 wt% or more.
9. The inorganic fiber according to any one of 1-8, wherein the amount of each alkaline metal oxide is 0.01 wt% or more.
10. The inorganic fiber according to any one of 1-6 and 8-9, wherein the amount of SiO₂ is 71 wt% to 77 wt%.
11. The inorganic fiber according to 10, wherein the amount of SiO₂ is 71 wt% to 76 wt%.
12. The inorganic fiber according to any one of 1-11, wherein the amount of CaO is 20 wt% to 27 wt%.
13. The inorganic fiber according to 12, wherein the amount of CaO is 21 wt% to 26 wt%.
14. The inorganic fiber according to any one of 1-13, which has an average fiber diameter of 2 µm to 6 µm.
15. The inorganic fiber according to 14 which has an average fiber diameter of 2 µm to 4 µm.
16. A method of manufacturing the inorganic fiber according to any one of 1-15 which comprises preparing a melt containing SiO₂, CaO, MgO and Al₂O₃, and forming the melt into fiber.
17. A processed article obtained by using the inorganic fiber according to any one of 1-15.

According to the invention, fibers which have physiological solubility even after heating, and are excellent in fire resistance can be provided.

### BRIEF DESCRIPTION OF THE DRAWINGS

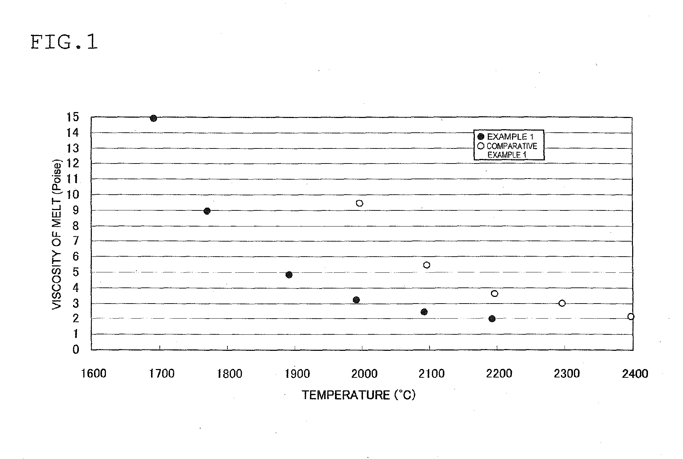

Fig. 1 shows relations between temperatures and viscosities of fibers in Example 1 and Comparative Example 1.

### MODE FOR CARRYING OUT THE INVENTION

A fiber of the invention has the following composition:
- SiO₂: 71 to 80 wt%
- CaO: 18 to 27 wt%
- MgO: 0 to 3 wt%
- Al₂O₃: 1.1 to 3.4 wt%

Usually, the fiber of the invention does not contain ZrO₂. The amount of ZrO₂ is 0.1 wt% or less, or less than 0.1 wt%.
Usually, the fiber of the invention does not contain R₂O₃ (wherein R is selected from Sc, La, Ce, Pr, Nd, Sm, Eu, Gd, Tb, Dy, Ho, Er, Tm, Yb, Lu, Y or mixtures thereof). The amount of R₂O₃ is 0.1 wt% or less, or less than 0.1 wt%.

An alkaline metal oxide (K₂O, Na₂O, Li₂O and the like) may or may not be contained, and the amount of alkaline metal oxides may be each or all 0.2 wt% or less, 0.15 wt% or less or 0.1 wt% or less. Alkaline metal oxides may each or all be contained in an amount of more than 0.01 wt%, 0.05 wt% or more, or 0.08 wt% or more.
K₂O may or may not be contained, and the amount of K₂O can be 0.2 wt% or less, 0.15 wt% or less, or 0.1 wt% or less. K₂O may be contained in an amount of more than 0.01 wt%, 0.05 wt% or more, or 0.08 wt% or more.
Na₂O may or may not be contained, and the amount of Na₂O can be 0.2 wt% or less, 0.15 wt% or less, or 0.1 wt% or less. Na₂O may be contained in an amount of more than 0.01 wt%, 0.05 wt% or more, or 0.08 wt% or more.

Usually, the fiber of the invention does not contain TiO₂. In addition, usually, each of ZnO, B₂O₃, P₂O₅, SrO, BaO and Cr₂O₃ is not contained. In a certain case, each of SrO, P₂O₅, BaO and Cr₂O₃ is contained in an amount of 0.1 wt% or less, or less than 0.1 wt%.
Fe₂O₃ may be contained in an amount of 0.1 to 0.3 wt%.

The total amount of SiO₂, CaO, MgO and Al₂O₃ is 99 wt% or more, and can be 99.5 wt% or more, or 99.7 wt% or more.
When Fe₂O₃ is contained, the total amount of SiO₂, CaO, MgO, Al₂O₃ and Fe₂O₃ may be 99.7 wt% or more, 99.8 wt% or more, 99.9 wt% or more, or 100 wt%.

When the amount of SiO₂ is 71 to 80 wt%, the produced fiber is excellent in heat resistance. When SiO₂ is too much, the production of cristobalite, which is produced after heating and is a carcinogenic substance, might increase. Therefore, the amount of SiO₂ is preferably 71 to 77 wt%, and more preferably 71 to 76 wt%.
When the amount of CaO is 18 to 27 wt%, the produced fiber has excellent biosolubility and high tensile strength. The amount of CaO is preferably 20 to 27 wt%, more preferably 21 to 26 wt%, and further preferably 23 to 26 wt%.
When the amount of MgO is 0 to 3 wt%, the produced fiber is excellent in biosolubility. When MgO is too much, the biosolubility after heating might deteriorate. The amount of MgO is preferably 0 to 1 wt%. Usually, MgO is present in excess of 0 wt%.

When the amount of Al₂O₃ is 1.1 to 3.4 wt%, the produced fiber has lowered heat shrinkage and increased heat resistance, and suitable water solubility without impairing a fiber quality, so that the fiber can easily be processed. The amount of Al₂O₃ is preferably 1.3 to 3.0 wt%.
The amount of Al₂O₃ can be 1.3 to 1.95 wt%, or 1.4 to 1.7 wt%. Furthermore, the amount of Al₂O₃ can be 1.5 to 3 or 2 to 3 wt%. When the amount of Al₂O₃ is 2.0 wt% or more, the fiber may contain alkaline metal oxides in an amount of 0.2 wt% or more (for example, 0.2 to 1.5 wt%).

The fibers of the invention having the above composition are excellent in biosolubility, and particularly after heating, the biosolubility is enhanced. The inorganic fibers of the invention are often used as insulating materials. Since the fibers before heating have the biosolubility, there be scarcely fear that the health of workers is impaired during manufacturing and installation. Since the fibers after heating have the biosolubility, there is scarcely fear that the health of workers is impaired during decomposition, and dismantlement after use under heating circumstance.

When the above-mentioned composition is employed, the good fibers having a high fiber quality can be obtained by a usual manufacturing method. Furthermore, a melt for producing the fiber of the invention has a low viscosity, and hence fine fibers can be produced at a low temperature. By spinning at a high temperature and at a high speed during manufacturing, a fiber diameter can be reduced. An average fiber diameter is usually 2 to 6 µm, and preferably 2 to 4 µm.

In the case of the fibers having a small fiber diameter, hand feeling is smooth, and prickly feeling does not occur. The fiber diameter being small means that the fibers easily dissolve in a physiological fluid and the number of fibers per unit volume of product increases, whereby the thermal conductivity of the product lowers and the heat insulation effect thereof is enhanced. In addition, when processing, the fibers having a small diameter enable the production of processed goods having a high density, and the goods thus processed can possess a high heat insulation effect. Furthermore, when a large number of fibers are present per unit volume, the obtained product has high tensile strength. Thus, the fibers of the reduced diameter have many advantages.

Moreover, the fibers of the invention include less kinds of essential ingredients, and hence the number of blending processes decreases, which leads to cost reduction. SiO₂ and CaO are inexpensive, but the other ingredients are expensive, which leads to cost increase. In addition, since kinds of ingredients whose amounts are to be finely regulated are limited, difficulty of manufacturing can be decreased.

The fiber of the invention can be manufactured by preparing a melt including SiO₂, CaO, MgO and Al₂O₃, and then producing the melt into fiber. For example, the fiber can be manufactured by a spinning method in which a molten material is pouring onto a wheel rotating at a high speed, thereby forming fiber, or a blowing method in which compressed air is applied to a molten material, thereby producing fiber.

From the fiber of the invention, it is possible to obtain processed products such as formed (shaped) articles and non-shaped materials. Specifically, there are obtained formed articles such as bulks, blankets, blocks; and boards, molds, papers, and felts which are produced by use of a solvent such as water. Further, there are obtained non-shaped materials such as mastiches, casters and coatings which are produced by use of a solvent such as water. They are used as a heat insulating material.

### EXAMPLE

### Example 1

A fiber of a composition shown in Table 1 was manufactured. The manufactured fiber had a fiber diameter of 3.3 µm, and good shape and appearance. In addition, the amount of flakes which were not formed into fiber was small. From this fiber, there could be manufactured processed articles such as bulks, blankets, blocks, boards, molds, papers, felts, and non-shaped materials without excessively solving out ingredients.
A fiber diameter was measured by the following procedure.
The fibers were observed and photographed through an electron microscope, and then 400 or more fibers of the photographed fibers were measured. An average of all the measured values of the fibers was defined as an average fiber diameter.

### Comparative Example 1

A fiber of a composition shown in Table 1 was manufactured.

**Table 1**

| | | Example 1 | Comparative Example 1 |
|---|---|---|---|
| Fiber composition (wt%) | SiO₂ | 73.1 | 76.2 |
| | CaO | 24.8 | 4.0 |
| | MgO | 0.3 | 17.6 |
| | Al₂O₃ | 1.6 | 1.8 |
| | Fe₂O₃ | 0.2 | 0.2 |
| | K₂O | 0.0 | 0.2 |
| | Na₂O | 0.0 | 0.0 |
| | ZrO₂ | 0.0 | 0.0 |
| | P₂O₅ | 0.0 | 0.0 |
| | B₂O₃ | 0.0 | 0.0 |
| | La₂O₃ | 0.0 | 0.0 |
| Average fiber diameter | | 3.26 µm | 4.06 µm |
| | | | Unit: wt% |

### Evaluation Example 1

With regard to the fibers obtained in Example 1 and Comparative Example 1, biosolubilities of fibers which were not heated and fibers which were heated at 800°C to 1260°C were measured in the following procedure.
Fibers were put on a membrane filter, and saline was then dropped onto the fibers by a micropump. A filtrate which was passed through the fibers and the filter was collected in a vessel. For collected filtrates after 24 hours and 48 hours, solved ingredients were quantitatively analyzed by an ICP emission spectroanalyzer, followed by calculating a solubility and a dissolution velocity constant. Elements measured were 4 elements of Si, Al, Ca and Mg which were main elements. The composition of the saline is shown in Table 2.
In evaluating the biosolubility of the fibers, an influence due to a difference of surface areas (≒ fiber diameters) of the fibers occurs in the case that a simple solubility is used. Therefore, the evaluation was made by measuring the fiber diameter, followed by conversion into the dissolution velocity constant (unit: ng/cm²•h) which is an amount of dissolution per unit surface area and unit time.
The dissolution velocity constant every heating temperature is shown in Table 3.
As shown in Table 3, in Comparative Example 1, the solubility into the saline noticeably decreases by heating at 1000°C or more, whereas in Example 1, the solubility increases without such decrease. This is considered to be caused by a difference between kinds of crystals formed from constitutional ingredients by the heating of the fibers.

**Table 2**

| Reagent | Weight (g) |
|---|---|
| NaCl | 6.78 |
| NaH₂PO₄·2H₂O | 0.18 |
| NaHCO₃ | 2.27 |
| Na₃citrate·2H₂O | 0.06 |
| Glycine | 0.45 |
| NH₄Cl | 0.54 |
| H₂SO₄ | 0.05 |
| CaCl₂ | 0.02 |
| Water | 1L |

**Table 3**

| Heating Temperature | Example 1 | Comparative Example 1 |
|---|---|---|
| Not heated | 306 | 355 |
| 800°C | 371 | 294 |
| 1000°C | 1136 | 26 |
| 1100°C | 1437 | 8 |
| 1260°C | 2621 | - |
| | | Unit: ng/cm²•h |

### Evaluation Example 2

With respect to the fibers obtained in Example 1 and Comparative Example 1, relations between temperatures and viscosities were examined in an electric furnace capable of heating up to 2500°C by use of a ball pull-up type viscosimeter. The results are shown in Fig. 1.
As shown in the drawing, a viscosity curve to the temperatures in Example 1 is more gradual than in Comparative Example 1. This fact indicates that for the fiber of Example 1, it is not necessary to raise a melting temperature, that is, the melting is possible with a low energy, and the melt can be extended to fibers at a higher speed owing to the low viscosity even at the same melting temperature. As a result, it is possible to reduce the fiber diameter.

### Evaluation Example 3

With respect to the fiber obtained in Example 1, the tensile strength of a blanket having a density of 128 kg/m³ and a thickness of 25 mm was measured. The results are shown in Table 4. In the same table, the results of tensile strengths of blankets described in Patent Document 2 (Japanese PCT Patent Application Laid-open No. 2005-514318) are also shown for comparison.
As shown in Table 4, the tensile strength of the fiber in Example 1 is equal to or higher than those of the examples of Patent Document 2 regardless of absence/presence of La. Particularly, in Patent Document 2, as an advantage of La₂O₃, there is described "It can be seen that the addition of only 1.3% La₂O₃ results in a considerable improvement in tensile strength, indicating a much improved fibre". However, the fiber in Example 1 of the invention has, though La₂O₃ is not added thereto, the tensile strength equal to or higher than that of the fiber to which La₂O₃ is added.

**Table 4**

| Oxides | Example 1 | Examples of JP-A-2005-5144318 | |
|---|---|---|---|
| | | No La | With La |
| Na₂O | <0.05 | <0.05 | 0.18 |
| MgO | 0.33 | 0.89 | 0.46 |
| Al₂O₃ | 1.55 | 0.64 | 0.66 |
| SiO₂ | 73.1 | 72.9 | 73.2 |
| K₂O | <0.05 | <0.05 | 0.08 |
| CaO | 24.8 | 25.5 | 23.6 |
| Fe₂O₃ | 0.22 | 0.11 | 0.14 |
| La₂O₃ | 0 | 0 | 1.3 |
| Tensile strength | 48-68 | 25-30 | 35-60 |

| | | | |
|---|---|---|---|
| Unit of ingredient: wt% Unit of tensile strength: kPa. | | | |

### Examples 2 to 18 and Comparative Examples 3 and 4

Fibers of compositions shown in Table 5 were manufactured, and then evaluated.
For measurement of a shrinkage caused by heating, blankets were manufactured, and dimensions of the blankets before and after burning of at 1100°C and 1260°C for 24 hours were measured.
Tensile strength was measured by means of a universal tester.
Biosolubilities were measured in the same manner as in Evaluation Example 1.

**Table 5**

| | Composition (wt%) | | | | | | | Heat shrinkage (%) | | Tensile strength (kPa) | Biosolubility (ng/cm²·h) | | |
|---|---|---|---|---|---|---|---|---|---|---|---|---|---|
| | SiO₂ | CaO | MgO | Al₂O₃ | Fe₂O₃ | K₂O | Na₂O | 1100°C | 1260°C | | Not heated | 1100°C | 1260°C |
| Example 2 | 72.8 | 23.1 | 0.3 | 3.4 | 0.2 | 0.1 | 0.0 | - | - | - | 68 | - | - |
| Example 3 | 73.0 | 23.2 | 0.3 | 3.2 | 0.1 | 0.1 | 0.0 | 0.85 | 4.42 | 70.9 | 93 | - | - |
| Example 4 | 73.2 | 23.2 | 0.3 | 3.0 | 0.2 | 0.1 | 0.0 | 0.89 | 4.43 | 60.0 | 62 | 722 | 3204 |
| Example 5 | 73.2 | 23.6 | 0.3 | 2.7 | 0.1 | 0.0 | 0.0 | 0.67 | 2.90 | 53.6 | 98 | 902 | 4509 |
| Example 6 | 72.8 | 24.1 | 0.3 | 2.5 | 0.1 | 0.1 | 0.0 | 0.57 | 2.34 | 73.1 | 155 | 842 | 4131 |
| Example 7 | 72.9 | 24.4 | 0.3 | 2.3 | 0.2 | 0.0 | 0.0 | 0.61 | 2.21 | 60.1 | 201 | 848 | 3669 |
| Example 8 | 73.0 | 24.3 | 0.3 | 2.2 | 0.1 | 0.0 | 0.0 | - | - | - | 204 | - | - |
| Example 9 | 73.0 | 24.6 | 0.3 | 2.0 | 0.2 | 0.1 | 0.0 | 0.64 | 2.23 | 56.4 | 235 | 774 | 3489 |
| Example 10 | 72.2 | 25.3 | 0.3 | 1.9 | 0.1 | 0.1 | 0.0 | 0.79 | 2.33 | 80.0 | 259 | - | - |
| Example 11 | 72.8 | 25.0 | 0.4 | 1.6 | 0.2 | 0.1 | 0.0 | 0.95 | 3.11 | 55.8 | 343 | - | - |
| Example 12 | 72.5 | 25.4 | 0.4 | 1.5 | 0.1 | 0.1 | 0.0 | 0.89 | 2.77 | 46.4 | 333 | 923 | 2886 |
| Example 13 | 72.6 | 25.5 | 0.3 | 1.3 | 0.1 | 0.1 | 0.0 | 0.69 | 2.95 | 42.4 | 571 | | |
| Example 14 | 73.0 | 25.2 | 0.3 | 1.2 | 0.2 | 0.1 | 0.0 | 0.76 | 3.57 | 33.2 | - | - | - |
| Example 15 | 72.7 | 25.5 | 0.4 | 1.1 | 0.2 | 0.1 | 0.0 | 0.83 | 4.09 | 35.3 | 705 | - | - |
| Example 16 | 73.0 | 24.1 | 0.3 | 2.1 | 0.1 | 0.1 | 0.2 | 0.56 | 1.92 | 85.0 | 283 | 931 | 3381 |
| Example 17 | 72.6 | 24.5 | 0.3 | 2.2 | 0.1 | 0.0 | 0.2 | 0.48 | 1.80 | 72.1 | 232 | 963 | 3163 |
| Example 18 | 72.7 | 24.6 | 0.2 | 2.3 | 0.1 | 0.1 | 0.2 | 0.62 | 2.68 | 85.4 | 237 | 860 | 3292 |
| Com. Ex. 2 | 72.6 | 23.2 | 0.3 | 3.6 | 0.1 | 0.1 | 0.0 | 1.01 | 6.33 | 65.0 | - | - | - |
| Com. Ex. 3 | 72.7 | 23.2 | 0.3 | 3.5 | 0.1 | 0.1 | 0.0 | 1.30 | 6.24 | 65.1 | 83 | 772 | 3096 |
| Com. Ex. 4 | 73.1 | 25.2 | 0.3 | 1.0 | 0.2 | 0.1 | 0.0 | 1.11 | 5.76 | 34.7 | 898 | 1045 | 2202 |

It can be understood that the fiber of Comparative Examples 2 to 4 in which the amount of alumina is outside the scope of the invention is particularly poor in shrinkage caused by heating.

### INDUSTRIAL APPLICABILITY

The inorganic fibers of the invention can be used in various use applications as insulating materials and replacements for asbestos.
Although only some exemplary embodiments and/or examples of amount have been described in detail above, those skilled in the art will readily appreciate that many modifications are possible in the exemplary embodiments and/or examples without materially departing from the novel teachings and advantages of amount. Accordingly, all such modifications are intended to be included within the scope of amount.
The documents described in the specification are incorporated herein by reference in its entirety.

## Claims

1. An inorganic fiber having the following composition:
SiO₂ 71 wt% to 80 wt%
CaO 18 wt% to 27 wt%
MgO 0 wt% to 3 wt%
Al₂O₃ 1.1 wt% to 3.4 wt%
wherein the amount of each of ZrO₂ and R₂O₃ (R is selected from Sc, La, Ce, Pr, Nd, Sm, Eu, Gd, Tb, Dy, Ho, Er, Tm, Yb, Lu, Y or mixtures thereof) is 0.1 wt% or less, the amount of each alkaline metal oxide is 0.2 wt% or less and the total amount of SiO₂, CaO, MgO and Al₂O₃ is 99 wt% or more.

2. The inorganic fiber according to claim 1, wherein the amount of each alkaline metal oxide is 0.1 wt% or less.

3. The inorganic fiber according to claim 1 or 2, wherein the amount of each of TiO₂, ZnO, B₂O₃ and P₂O₅ is 0.1 wt% or less.

4. The inorganic fiber according to any one of claims 1-3, wherein the amount of Al₂O₃ is 1.1 wt% to 1.95 wt%.

5. The inorganic fiber according to any one of claims 1-3, wherein the amount of Al₂O₃ is 2.0 wt% to 3.4 wt%.

6. The inorganic fiber according to any one of claims 1-3, wherein the amount of Al₂O₃ is 1.3 wt% to 2.5 wt%.

7. The inorganic fiber according to any one of claims 1-6, wherein the amount of SiO₂ is 71.25 wt% or more.

8. An inorganic fiber having the following composition:
SiO₂ 71 wt% to 80 wt%
CaO 18 wt% to 27 wt%
MgO 0 to 3 wt%
Al₂O₃ 2.0 wt% to 3.4 wt%
wherein the amount of each of ZrO₂ and R₂O₃ (R is selected from Sc, La, Ce, Pr, Nd, Sm, Eu, Gd, Tb, Dy, Ho, Er, Tm, Yb, Lu, Y or mixtures thereof) is 0.1 wt% or less, and the total amount of SiO₂, CaO, MgO and Al₂O₃ is 99 wt% or more.

9. The inorganic fiber according to any one of claims 1-8, wherein the amount of each alkaline metal oxide is 0.01 wt% or more.

10. The inorganic fiber according to any one of claims 1-6 and 8-9, wherein the amount of SiO₂ is 71 wt% to 77 wt%.

11. The inorganic fiber according to claim 10, wherein the amount of SiO₂ is 71 wt% to 76 wt%.

12. The inorganic fiber according to any one of claims 1-11, wherein the amount of CaO is 20 wt% to 27 wt%.

13. The inorganic fiber according to claim 12, wherein the amount of CaO is 21 wt% to 26 wt%.

14. The inorganic fiber according to any one of claims 1-13, which has an average fiber diameter of 2 µm to 6 µm.

15. The inorganic fiber according to claim 14 which has an average fiber diameter of 2 µm to 4 µm.

16. A method of manufacturing the inorganic fiber according to any one of claims 1-15 which comprises preparing a melt containing SiO₂, CaO, MgO and Al₂O₃, and forming the melt into fiber.

17. A processed article obtained by using the inorganic fiber according to any one of claims 1-15.
